# EUROPEAN PATENT SPECIFICATION

(11) **EP 2 719 273 B1**
(45) Date of publication and mention of the grant of the patent: **28.02.2018**
(21) Application number: 12188268.2
(22) Date of filing: 12.10.2012
(51) Int. Cl.: A01G 1/06

(54) **Method and apparatus for cutting plants**
Verfahren und Vorrichtung zum Schneiden von Pflanzen
Procédé et appareil permettant de découper des végétaux

(43) Date of publication of application: 16.04.2014
(73) Proprietor: Nederlandse Organisatie voor toegepast- natuurwetenschappelijk onderzoek TNO, 2595 DA 's-Gravenhage (NL)
(72) Inventor: Snel, Robert, 2628 VK Delft (NL)
(74) Representative: V.O.

(56) References cited:
- EP-A1- 2 044 832
- EP-A1- 2 454 933
- WO-A1-2006/087900
- WO-A1-2010/056109

## Description

More in particular it relates to a method for cutting plants comprising the consecutive steps of (i) providing a plant to a carrier for transporting the plant to a cutting area, (ii) producing a first image of the plant by a first camera system, (iii) analysing the first image so as to determine at least one cutting position where the plant is to be cut, (iv) positioning the plant for cutting, and (v) cutting the plant at the cutting position into at least two parts. Further, the invention relates to an apparatus for cutting plants comprising (i) a carrier for carrying the plant, (ii) a first camera system for providing a first image of the plant carried by the carrier, (iii) a processing unit for the analysis of the first image of the plant, and (iv) a cutting robot comprising a cutting member for cutting a plant into at least two parts and a movable arm for moving the cutting member towards a plant at the carrier.

### State of the art

Cutting plants is a process in horticulture that is still mainly performed by man power. It is a labour intensive process and therefore costly. Unfortunately, it is a difficult process to be automated because on the one hand the cutting of the plants has to be performed carefully and at specific positions of a plant and on the other hand each plant has a unique geometry. There are some methods and apparatus known for automated cutting of plants, more in particular for strike cutting. These methods are based on making an image of the plant, analysing the image and determining one or more cutting positions, and cutting the plant at the cutting positions after the cutting positions have been determined. For this purpose an apparatus for automated strike cutting of plants comprises one or more camera systems or so-called vision systems for producing an image of the plant and for determining the cutting position along the stem of the plant. The plants are cut in a cutting area, viz. the area where the plant is provided to a cutting device in order to be cut. Determining the cutting position of a plant is known from the manual cutting of plants and therefore is a straight forward process if the geometry of the plants is known. European patent application EP 0 853 873 A1 for example discloses in detail how the cutting positions of roses can be determined from an image. The plant is rotated around its stem in front of a vision system for obtaining a three dimensional image of the plant. Subsequently the plant is transported to a cutting area for cutting the plant into two or more parts by means of a cutting robot. During the transport from the vision system to the cutting robot, the roses are clamped in a hanging position by a gripper. During this transport, so after the cutting position has been determined, the orientation of the plant, more in particular the cutting position relative to the gripper, may change before the plant reaches the cutting area.

European patent EP 1 377 153 B1 also discloses a method and apparatus for strike cutting of plants. This known apparatus comprises specific supply vases in order to provide the stem of the plant to the gripper. Here also the plants are transported in a hanging position from the vision system to the cutting area. Here again, the orientation of the plant may change before the plant reaches the cutting area.

European patent application EP 2 454 933 A1 also discloses a method and apparatus for strike cutting of plants in which the plants are being transported after their position has been determined by a vision system. This known method allows an efficient use of the cutting robot because the plant is taken away from the robot after just one cutting is performed. If an additional cutting of the plant is required the plant is provided to the robot again. This method and apparatus are not limited to hanging plants but again, as in the afore mentioned methods and apparatus, the plants are being transported from the vision system to the cutting area. During transport or providing the plant again, the orientation of the plant may change.

### Summary of the invention

An objective of the present invention is to provide a method for cutting plants which method allows accurate cutting of plants.

This objective of the invention is achieved by a method for cutting plants, according to claim 1. An advantage of cutting the plant on the basis of information from a second image taken in the cutting area, viz. in the space allocated for cutting the plant, is that it allows to use the actual position and orientation of the plant for the cutting. An effect is that the cutting member can be directed towards the point in space where the cutting position of the plant is actually situated. Therefore the movement of the cutting member can be corrected for possible reorientation of the plant during the transport from the first camera system to the cutting area. Consequently, the cutting of the plant can be performed more accurately.

An embodiment of the method according to the invention comprises taking two or more images of the plant from different points of view in order to obtain the first image for determining a cutting position at the plant. An advantage of making two or more images from different angles and viewpoints is that also parts that are hidden for the camera from one point of view may be visible from another point of view. An effect is that a more accurate reconstruction of the plant can be made and consequently, the cutting position can be determined more accurately. Another effect is that such a more accurate reconstruction may allow determining cutting positions that otherwise could not be determined at all, for example because of the complex geometry of side branches of the plant.

Another objective of the present invention is to provide an apparatus for accurate cutting of a plant.

This objective of the invention is obtained by an apparatus for cutting of a plant, according to claim 10. An advantage of a second camera system for providing a second image of the plant in the cutting area is that the actual point in space of the cutting position of the plant and more in particular the actual point in space with respect to the cutting robot and cutting member can be determined.

The effect of knowing the actual relative position of the cutting position of the plant with regard to the cutting member is that the cutting member can be directed towards the actual cutting position with great accuracy. Consequently the cutting of the plant will be more accurate than in case where the actual position in the cutting area is not determined by using a second image.

An embodiment of the apparatus according to the invention, comprises a rotatable platform for rotating a plant around its stem. An advantage of rotating the plant around, or mainly around, its stem is that one can obtain different views of the plant from just a fixed point. The effect is that it is not necessary to move the first camera system to make images from different points of view. In other words, the first camera system can be placed at a fixed position relative to for example the floor or ground on which the apparatus is standing. Another effect is that the plant can be oriented properly to allow cutting. The cutting robot can be placed at a fixed position relative to for example the floor or ground on which the apparatus is standing. If the first camera system and the robot are at a fixed position, errors as a result of movement of these devices relative to each other are eliminated and therefore the cutting of the plant can be more accurate. Further the cutting may be faster because rotating the plant will in general be faster than moving a camera system and a robot around a fixed plant.

### Brief description of the figures

- Figure 1: is a schematic representation of an embodiment of the method
- Figure 2: is a schematic representation of two pictures of a plant made by the first camera
- Figure 3: is a schematic representation of an embodiment of the apparatus
- Figure 4: is a schematic representation of an embodiment of the first camera system comprising a telecentric lens
- Figure 5: is a schematic representation of a picture made by the second camera

In the following some embodiments of the method and the apparatus are described in more detail. In these embodiments of the method and the apparatus, the plants are provided and transported in a standing position. The method and the apparatus are however, not limited to standing plants. If proper mechanical constructions are used in the apparatus or when implementing the method, the invention can also be used for plants that are transported in a hanging position. It is also understood that the method and apparatus are not limited to a specific type of cutting. The invention may be used, among others, for strike cutting, to slip and to trim plants. The invention may be used for cutting different types of plants, including but not limited to fittonia, hedera, buxus, roses, kalanchoe, and geranium.

The word picture as used here refers to a two-dimensional or three-dimensional representation of what is seen by a human, either in colour, in black-white or in a grey scale. An image of a plant may be a picture or any other type of information about the geometry of the plant. An image of a plant may for example be information about the pixel density along a picture line related to the angle of rotation of the plant relative to a camera. An image will in general be obtained from analysis and processing of one or more pictures.

### Detailed description of the invention

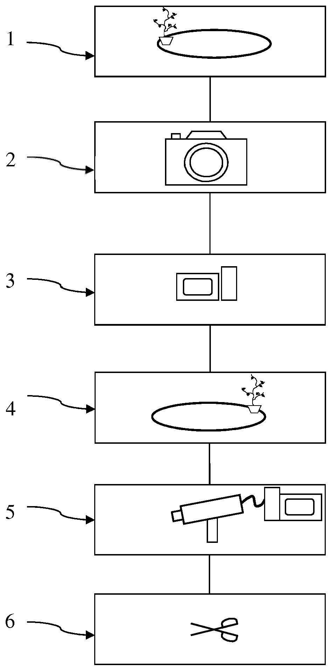

The method according to the invention will be elucidated here with reference to the embodiment shown in figure 1. The first step is providing a plant that has to be cut to a carrier that can later transport the plant to a cutting area. Providing (1) the plants to the carrier can be performed manually but it may be preferred to use an automated supply system. In the case that the method is performed fully automatically, the plants may be provided in a continuous or semi-continuous flow of plant holders, for example pots or grippers, each containing a single plant. A conveyor belt is a favourable way of providing the pots to the carrier, but any other supply system may be suitable. Transporting the plants by the carrier can be performed in several ways, depending on the type of carrier. The plants can be placed on the carrier for example in a pot or vase, can be clamped to the carrier by a gripper for example in a hanging position, or can be attached to the carrier in any other way that allows the plant to be transported by the carrier.

If the plants are provided to the carrier by a conveyor belt, pots with plants can be simply pushed onto the carrier. In another embodiment the plants are picked up with a gripper and placed on or in plant holders that are fixed to or placed on the carrier. The areas at the carrier where the plants are placed are preferably predefined locations, viz. locations that have a fixed position on the carrier. Predefining the locations includes methods in which the position to the carrier is determined after the plant has been positioned. However, it is preferred to have the locations defined before a plant is placed at the carrier. This includes methods like marking areas where the plants have to be placed, and using clamping means located at well-defined positions of the carrier.

Once a plant is placed at the carrier, either standing or hanging, it has to be determined at which position or positions the plant has to be cut. For this purpose the method comprises a step (2) in which a first image of the plant is produced. This image is called the first image because in a further step of the method, a second image is constructed as will be discussed later. The first image can be produced for example by making one or more pictures with a photo camera or a video camera or the image can be produced by an advanced vision camera system known to those skilled in the art. This image need not be an image of the whole plant, but the image of only a part of the plant should cover at least one cutting position of the plant. The image can be for example a simple picture of the plant providing information about the geometry of the plant in two dimensions only. The image can also be digital information about the geometry of the plant which information is not a two dimensional picture. For example the digital information can be information about the density of pixels representing the plant, along certain cross sections of the picture.

Two-dimensional information will often not be sufficient to determine the cutting position at a plant. For this reason, a three-dimensional image may be preferred. A three-dimensional image of a plant is an image that provides information about the three-dimensional geometry of the plant. In other words, it provides more information than just a two-dimensional view of the plant because a two-dimensional image only comprises geometrical information from one point of view, whereas a three-dimensional image comprises information from more than one point of view. The camera system is preferably a digital camera system that allows further processing of the image by appropriate pattern recognition software.

The first image is used for analysis of the plant geometry in a subsequent step (3) of the method in order to determine at least one cutting position at the plant. Analysis of the geometry means that, based on one or more pre-defined conditions, a position for cutting the plant is searched for. Preferably, state-of-art-art image or pattern recognition software is used for this purpose. Of course the analysis may reveal that there is no such a cutting position at all for a certain plant. In such a case the plant will be removed without cutting.

The method is not limited to any specific type of cutting and neither to any specific type of plant. The method is in particular suited for strike cutting of plants. Typically, such strike cutting requires that the stem of the plant is cut into two or more parts. The cutting position of the plant, usually at the stem, may for example be defined by a certain distance to a side branch or between side branches at different heights. Those skilled in the art of image analysis and pattern recognition will know how to implement an algorithm to determine a cutting position at the plant. It is appreciated that the cutting position, in general, will depend on the type of plant. The image analysis can also be used to determine the position of the plant at the carrier if required, for example when the position of the plant is not defined before the plant is positioned at the carrier.

After making the picture or pictures for producing the first image, the plant has to be positioned (4) for cutting. This positioning includes orienting the plant in such a way, preferably by rotating around its stem, that the cutting member can perform the cutting without unnecessarily damaging the plant, in particular not damaging branches or other parts of the plant that need not to be cut. A proper positioning may also minimize the required movements of the cutting member. The positioning may further include transporting the plant from the area where the first image is made, to the cutting area by the carrier. In an embodiment where the trajectory of the plant to the cutting area is known beforehand, this trajectory can be taken into account when orienting the plant relative to the carrier before cutting. The trajectory may be known beforehand when the plant is on a fixed place relative to the carrier in its transporting direction and the movement of the carrier is known. The plant may for example be fixed to a conveyor belt by a gripper, which conveyor transports the gripper along a predefined trajectory. Orienting the plant relative to the carrier can be performed while the carrier moves to transport the plant towards the cutting area. This will in particular be preferred if this orienting, for example rotating around the stem, limits the speed of the whole process. However, the orienting relative to the carrier may also take place in the area where the pictures are made or in the cutting area.

After the plant is positioned in the cutting area on the basis of the analysis of the first image, a second image of the plant is made (5). This second image is used to direct a cutting member towards the cutting position at, for example, the stem. This second image allows correcting for changes in the orientation of the plant during its positioning after the first image was produced. In particular it allows correcting for changes in the geometry of the plant itself during its positioning. For example in plants where the side branches are very flexible. The second image can further be used for refining the cutting position at the plant as obtained from the first image. This may in particular be of interest for plants having a complex shape, for example plants where several branches rise at one position of the stem. In addition, using a second image allows that the determination of the cutting position on the basis of the first image need not to be very accurate. As a consequence the first camera system may have a lower resolution and less data have to be analysed by the software. Consequently, less computer power is required, resulting in a reduction of costs for the first camera system. In addition the steps of producing a first image, analysing the image, and positioning the plant for cutting may require less time. Reducing the time for these steps results in a more efficient cutting of the plants. It is appreciated that under specific circumstances the plant may be positioned in the cutting area such that no further correction is required. However, the second camera may be used to detect that no further correction is required and so the second camera is also in this situation used to direct the cutting member to the cutting position of the plant.

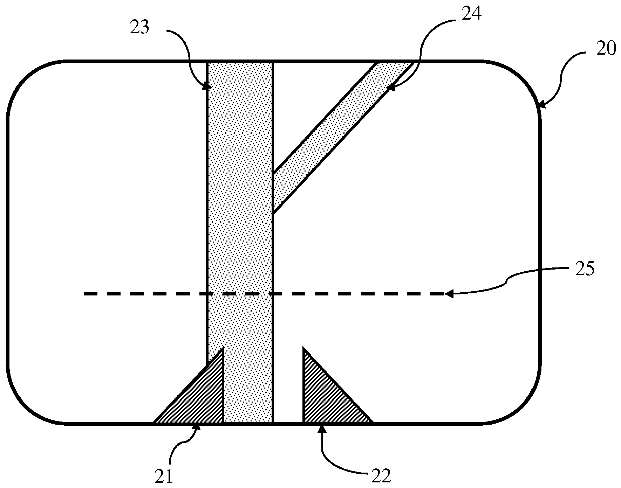

Finally, the plant is cut (6). A cutting member is directed towards the cutting position of the plant on the basis of information provided by the second image. Such information may for example be a picture as shown in figure 5 which will be discussed later. In a preferred embodiment of the method, the plant is not moved after it has been positioned for cutting and a second image has been made. In this preferred embodiment, additional second images, so more than one image of the plant at the cutting position, will be made while a robot arm comprising a cutting member is moving towards the cutting position. However, the method also allows that only a single second image is made, for example before the robot starts moving the cutting member. In still another embodiment, the robot arm holding the cutting member first moves along a certain distance towards the plant on the basis of the information obtained from the first image and subsequently moves further towards the plant on the basis of the second image.

Often a plant has to be cut into more than two different parts, for example to obtain more than one strike cutting from a single plant. The number of cuttings can be determined beforehand based on the type of plant, by visual observation of a person, or automatically by means of image analysis. For a fast and accurate cutting an image analysis of the individual plants is preferred. The total number of cuttings may be determined before a first cutting of the plant or it may be determined later, for example after each cutting. In the later situation it has to be decided after each cutting whether the plant has to be cut further to obtain the required total number of cuttings. In the first situation the decision about further cutting may be based on the earlier obtained image analysis or on a further image analysis of the remaining part of the plant.

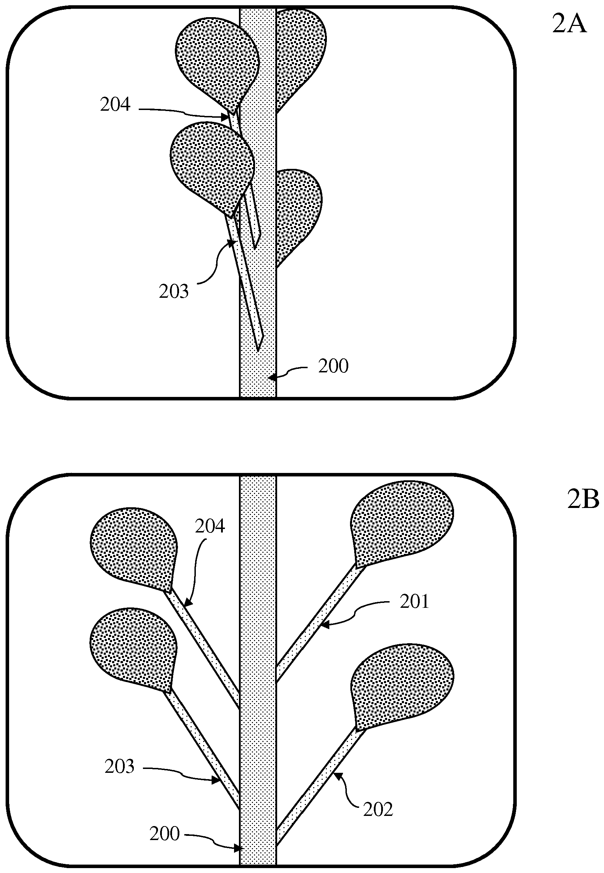

In a preferred embodiment of the method the first image of the plant is obtained from pictures taken from different points of view of the plant. One advantage of making more than one picture is that this allows to determine cutting positions that are not visible from a specific point of view as is illustrated in figure 2. Figure 2 shows schematically the same plant seen from two points rotated around the stem (200) of the plant. It is understood that such two points of view can be obtained by rotating the plant, by rotating the camera or by rotating both relative to each other. The upper picture indicated by 2A, does not allow determining the cutting position of the plant because only two side branches (203, 204) are visible whereas it is evident that there is at least one side branch hidden behind the stem. The lower picture indicated by 2B, obtained from another point of view does allow determining the cutting position of the plant because here also the two side ranches (201, 202) that are hidden in figure 2A are visible. The lower picture allows determining a cutting position for cutting the stem without damaging the two side branches (201, 202) that are hidden behind the stem in the upper picture.

For plants with a simple geometry, a few pictures may satisfy for determining the cutting position of a plant. However, for more complex shaped plants a more detailed three-dimensional image may be required for example because it is not possible to make a single picture that allows determining the cutting position. To obtain such a three dimensional image, more pictures have to be made and combined. Based on such two-dimensional pictures a three-dimensional image of the plant can be obtained by state-of-the-art image analysis software. Such software may be dedicated software taking into account specific properties of plants, for example specific properties of internodes, more in particular the distribution of internodes along a stem of the plants to be cut.

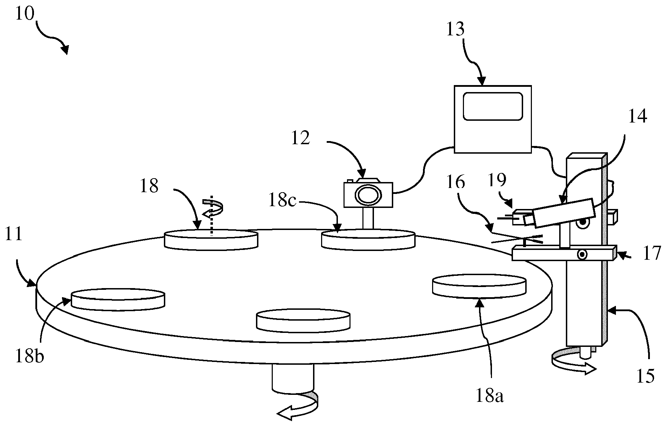

A preferable embodiment of the apparatus according to the invention will be discussed here in more detail referring to figure 3. The apparatus comprises a carrier (11) for carrying a plant. This carrier is configured so as to transport, during use, a plant to a space allocated for cutting the plant, viz. the cutting area. The cutting area in this embodiment is the space above the platform (18a) closely situated to a cutting robot (15). The carrier may for example be a turntable as is shown in figure 3 or it may be a conveyor belt. Preferably, the plants are placed on or attached to such a carrier at predefined positions. The plants may for example be hold by grippers that are hanging at equidistant positions from a conveyor belt or a transporting cable. Pots, vases or other types of containers comprising the plants may be placed on a turntable or a conveyor belt with predefined locations for the pots or vases. The plants may also be placed in pots or vases that are already on the carrier.

The apparatus further comprises a first camera system (12) for providing a first image of a plant carried by the carrier. The camera system preferably is situated at a fixed position near the carrier, more in particular at a position between the point where the plants are provided to the carrier, for example at the position indicated by (18b), and the point (18a) where the plants are to be cut. In this geometry, the plant can first pass the camera system at the position indicated by (18c) before it enters the cutting area when the apparatus is in use. Such a geometry will usually result in the shortest trajectory of the plant and therefore in the shortest handling time. For the automated cutting of plants, the camera system preferably comprises a digital photo camera system for making and storing pictures in an internal memory or in an external computer memory or other digital storing medium. The camera system may also comprise a digital video camera or it may be an advanced 3D-camera system. The system may comprise a processing unit for processing two-dimensional pictures into a three-dimensional representation of the plant.

The first image of the plant has to be analysed in order to determine the position or positions at the plant where the plant has to be cut. Therefore, the apparatus comprises a processing unit (13) for analysing the first image. This processing unit is configured so as to receive the first image, more in particular to receive the digital information representing the image either by wire or wireless from the camera system (12). The processing unit is further configured as to receive computer software for analysing the image, more in particular software for determining a cutting position of a plant. The processing unit and the camera may be physically incorporated in one type of equipment. The plant may be positioned relative to the cutting robot on the basis of the image obtained by the first camera system, the cutting position at the plant and the predefined trajectory of the plant towards the cutting area.

Besides the first camera system for making a first image of the plant, the apparatus comprises a second camera system (14) for providing a second image of the plant in the cutting area. This second camera system is used to determine the relative position of the plant, more in particular the cutting position at for example the stem, and the cutting member (16) after the plant has been placed in the cutting area. The image of the second camera system is used for further refinement of the cutting position or for correcting any misalignment due to for example the transport of the plant to the cutting area or errors in the calibration of the first camera system relative to the cutting member, or due to mechanical drift of the apparatus. It is noted here that a typical cutting accuracy should be in the order of millimetres, often even less than one millimetre. Preferably the cutting accuracy obtained by the method, viz. the accuracy of the position at which the plant is cut, is about 0.1 millimetre.

For cutting a plant into at least two parts, the apparatus comprises a cutting member (16) which may be for example a knife, a pair of cutters, or a pair of scissors. The cutting member may be attached to a movable robot arm (17) for moving, manipulating, and operating the cutting member. Usually such a cutting member will be placed at the distal end of the robot arm. Preferably, only the arm of the robot may move, but it is also possible to move the whole robot in order to move the arm and the cutting member towards the plant. The robot is configured for receiving control information from a second camera system (14), as will be described below. The robot (15) further may be configured for receiving control information from the processing unit (13) for a preliminary, coarse positioning of the cutting member in the cutting area. Such a coarse positioning may enhance the speed of the whole cutting process, depending on the time that is required for the different steps, because the cutting device is already close to the cutting position of the plant at the moment that the second camera system start providing information about the actual cutting position.

In addition to the cutting member, the robot arm preferably comprises a gripper (19) for holding the plant when it is cut, more in particular for holding that part of the plant that is not attached to the carrier after cutting. For the cutting of standing plants such a gripper will be located above the cutting member (16), whereas for hanging plants the gripper will be placed below the cutting member. Although preferably the cutting device and the gripper are integrated into a single robot arm in order to allow a good co-ordination between the cutting and gripping process and to obtain a compact construction, they need not be integrated.

The second camera system (14) may be placed at a fixed position besides the carrier and the cutting robot (15) in such a way that it sees both a part of the plant around the cutting position and the cutting member of the robot. However, an advantageous position of the second camera is at the robot arm. In particular a position is preferred that results in a view along the cutting member towards the plant. Such a positioning of the second camera results in images that can be analysed easily and fast for possible correction of the movement of the cutting member during approaching the plant for cutting, so to say "on the fly". Figure 5 illustrates this schematically. This figure shows a two dimensional picture (20) of a part of a stem (23), a part of a side branch (24) and part of the cutting member, more in particular a left cutting edge (21) and a right cutting edge (22) of the cutting member. Here, the cutting member is not yet positioned correctly to cut the stem (23) at the cutting position indicated by the dashed line (25) below the side branch (24). The cutting member has to move to the right to have the stem in the middle between the two cutting edges. The second camera system may be of the same type as the first camera system, but need not to be because the function of the second camera system is different from the first camera system. A two dimensional image cannot provide information about the third dimension, in this case the distance between the cutting member and the stem. This may be a reason to use a 3D camera system as the second camera system. However, often such a more advance camera system is not needed because of the following. The plant and the cutting member are already rather well positioned relative to each other on the basis of the information from the first image. Typically the misalignment will be in the order of few millimetres or less. The length of the cutting member, viz. its extension in the direction of the plant, typically is in the order of a few millimetres up to a centimetre. For this reason, the misalignment in this direction is not very critical in the cutting. The stem will always be cut by the two cutting edges when the stem is somewhere between the two cutting edges.

Returning to figure 3, the second camera system (14) may comprise its own processor for analysis of the image but it may also be connected by wire or wireless to an external data processor or to the data processor that is used for analysing the first image. Such a data processor (13) may also be used to control the robot, although in practice the robot may have its own processor for moving the robot and operating the cutting member. The apparatus comprising all the elements described here may be an integrated product comprising for example one electronic device for analysis and control of the different elements such as the robot and the cameras. The apparatus, may however also be composed of several stand-alone modules. In this later case, these modules, are configured to communicate with each other, viz. to send and receive information to and from other modules.

In another embodiment of the apparatus, the carrier comprises a rotatable platform (18) for rotating a plant around its stem. In the embodiment shown in figure 3, the plant will stand on the platform to be rotated and to transported along the first camera to the cutting area (18a). In other embodiments the plant may hang below a gripper. It is appreciated that rotating around the stem should be interpreted as rotating around an axis that substantially coincides with the stem because often the stem of a plant may not be as straight as an arrow. Such a rotatable platform can advantageously be used for making the first image of the plant. To obtain a good image of the plant, making only one picture from one point of view is not sufficient as is illustrated by figure 2. When such a picture is made by a normal digital camera, so not a 3D-camera, the picture does only provide a two-dimensional image of the plant. So for determining an accurate cutting position, a more complex image has to be produced, which image may be based on pictures from different points of view. Although it is possible to move the camera around the plant and make pictures from different points, it is preferred that the camera is at a fixed position and that the plant is rotated around its stem in order to obtain pictures from different points of view. The platform may for example make only a few steps, for example four steps of 90 degrees, or it may make steps of for example 10 degrees to obtain a more accurate image of the plant. The actual number of different pictures or the number of steps will depend, among others, on the complexity of the plant and the required accuracy.

A rotatable platform for each individual plant on the carrier not only allows rotation of the plant for making the first image, but it can also be used for rotating the plant in an optimal position for cutting after this cutting position of the plant has been determined. The processing unit may on the basis of the image, the optimal cutting position, the actual (rotational) position of the plant relative to the carrier, and the trajectory of the plant from its actual position to the cutting area, calculate how the plant has to be rotated before cutting.

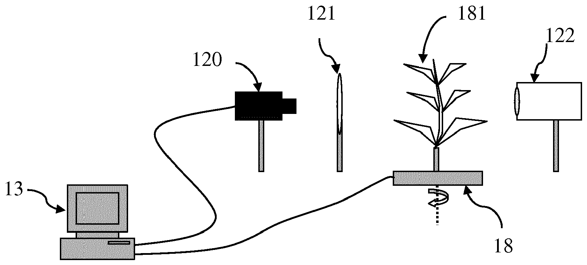

In a preferred embodiment of the apparatus, the first camera system comprises a telecentric lens as is shown schematically in figure 4. When such a telecentric lens (121) is placed in front of the camera, viz. between the plant (181) and the recording position, viz. e.g. the CCD in a digital camera (120), the size and shape of the image of the plant is independent of its distance to the camera. In practise the rotation of the plant during making the first image will not be exactly around its stem, even if the stem is as straight as an arrow. Therefore, the distance from a defined feature of the plant to the camera can be different for different degrees of rotation. Not using a telecentric lens would result in different sizes and shapes of the feature at the recording position of the camera and it consequently results in an image that is a poor representation of the plant. The apparatus may further comprise a diffuse light source (122) to improve the image. The diffuse light source is preferably situated at the side of the plant opposite to the camera. In other words it is arranged as to illuminate the plant from the backside, as seen from the camera.

The image of the plant can be obtained by using visible light, however it might also be obtained by infrared light or any other suitable wavelength of electromagnetic radiation, for example radar. However, infrared light, more in particular near infrared light in the range from 800 to 1000 nm is preferred. Light of this wavelength has the advantage that it goes, at least partly, though the leaves of a plant. In such an embodiment the stem is even visible when leaves are camouflaging the stem.

## Claims

1. Method for cutting plants, comprising the consecutive steps of
- providing (1) a plant to a carrier for transporting the plant to a cutting area,
- producing (2) a first image of the plant by a first camera system,
- analysing (3) the first image so as to determine at least one cutting position on the plant, where the plant is to be cut,
- positioning (4) the plant in a cutting area for cutting, said positioning in the cutting area being performed after said producing (2) the first image of the plant,
- cutting (6) the plant into at least two parts at the cutting position on the plant, when the plant is in the cutting area,
**characterised in that**
the cutting is performed by using (5) information from a second image made of the plant in the cutting area to direct a cutting member towards said cutting position on the plant.

2. Method according to claim 1, wherein the second image is obtained with a second camera system, and the second image is used for refinement of the cutting position that has been determined by said analysing (3) the first image.

3. Method according to claim 1, comprising obtaining the second camera image from a view along the cutting member towards the plant.

4. Method according to claim 1, comprising moving the cutting member towards the cutting position on the plant before obtaining the second image.

5. Method according to claim 1, wherein the trajectory of the cutting member is adjusted after analysis of each of a series of second images taken during the movement of the cutting member towards said cutting position on the plant.

6. Method according to claim 1, wherein the first image of the plant is obtained from images made from different points of view and the step of analysing the first image comprises the construction of a three-dimensional image from the images made from different points of view.

7. Method according to claim 6, wherein the plant is rotated substantially around its stem to obtain the first image of the plant.

8. Method according to any of the preceding claims, wherein positioning the plant in the cutting area for cutting comprises rotating the plant substantially around its stem.

9. Method according to claim 8, wherein positioning the plant in the cutting area for cutting further comprises conveying the plant along a predefined trajectory to the cutting area.

10. Apparatus (10) for cutting of a plant, comprising
- a carrier (11) for carrying the plant configured to position the plant in a cutting area,
- a first camera system (12) for producing a first image of the plant carried by the carrier in an area wherein the plant is located before being positioned in the cutting area,
- a processing unit (13) for the analysis of the first image of the plant, so as to determine at least one cutting position on the plant where the plant is to be cut,
- a cutting robot (15) comprising a cutting member (16) for cutting a plant into at least two parts at the cutting position and a movable arm (17) for moving the cutting member towards a plant at the carrier,
**characterised in that**
the cutting robot further comprises a second camera system (14) for providing a second image of the plant in the cutting area, to direct the cutting member towards the cutting position.

11. Apparatus according to claim 10, comprising means for using the second image to refine the cutting position that has been determined by said analysing (3) the first image.

12. Apparatus according to claim 10, comprising means for adjusting the trajectory of the cutting member after analysis of each of a series of second images taken during the movement of the cutting member towards said cutting position on the plant.

13. Apparatus according to claim 10, wherein the second camera system (14) is configured to obtain the second camera image from a view along the cutting member towards the plant.

14. Apparatus according to claim 10, wherein the cutting robot is configured to receive control information from the processing unit (13) for a preliminary, coarse positioning of the cutting member in the cutting area.

15. Apparatus according to claim 10, wherein the carrier comprises a rotatable platform (18) for rotating of a plant around its stem.

16. Apparatus according to any one of claims 1-15 wherein the first camera system (12) comprises a telecentric lens (121).

17. Apparatus according to claim 16 wherein the first camera system (12) comprises a light source (122) for providing diffuse light at the position of a plant carried by the carrier.

18. Apparatus according to claim 17, wherein the light source is an infrared lamp.

## Patentansprüche

1. Verfahren zum Schneiden von Pflanzen, umfassend folgende aufeinanderfolgende Schritte:
- Bereitstellen (1) einer Pflanze an einen Träger zum Transportieren der Pflanze zu einem Schneidebereich,
- Herstellen (2) eines ersten Bildes der Pflanze durch ein erstes Kamerasystem,
- Analysieren (3) des ersten Bildes, um mindestens eine Position auf der Pflanze zu bestimmen, wo die Pflanze geschnitten werden soll,
- Positionieren (4) der Pflanze in einem Schneidebereich zum Schneiden, welches Positionieren in dem Schneidebereich nach dem Herstellen (2) des ersten Bildes der Pflanze durchgeführt wird,
- Schneiden (6) der Pflanze in mindestens zwei Teile an der Schneideposition auf der Pflanze, wenn die Pflanze in dem Schneidebereich ist,
**dadurch gekennzeichnet, dass**
das Schneiden durchgeführt wird unter Verwendung (5) von Information von einem zweiten Bild, gemacht von der Pflanze in dem Schneidebereich, um ein Schneideelement zu der Schneideposition auf der Pflanze zu leiten.

2. Verfahren nach Anspruch 1, wobei das zweite Bild mit einem zweiten Kamerasystem erhalten wird und das zweite Bild zur Verfeinerung der Schneideposition, die durch die Analyse (3) des ersten Bildes bestimmt wurde, verwendet wird.

3. Verfahren nach Anspruch 1, umfassend das Erhalten des zweiten Kamerabildes von einer Ansicht entlang des Schneideelements zu der Pflanze.

4. Verfahren nach Anspruch 1, umfassend das Bewegen des Schneideelements zu der Schneideposition auf der Pflanze vor dem Erhalten des zweiten Bildes.

5. Verfahren nach Anspruch 1, wobei die Bewegungsbahn des Schneideelements angepasst wird nach Analyse von jeder einer Serie von zweiten Bildern, genommen während der Bewegung des Schneideelements zu der Schneideposition auf der Pflanze.

6. Verfahren nach Anspruch 1, wobei das erste Bild der Pflanze erhalten wird von Bildern, gemacht von verschiedenen Ansichtspunkten, und der Schritt des Analysierens des ersten Bildes den Aufbau eines dreidimensionalen Bildes anhand der Bilder, gemacht von verschiedenen Ansichtspunkten umfasst.

7. Verfahren nach Anspruch 6, wobei die Pflanze im Wesentlichen um ihren Stängel gedreht wird, um das erste Bild der Pflanze zu erhalten.

8. Verfahren nach einem der vorhergehenden Ansprüche, wobei das Positionieren der Pflanze in dem Schneidebereich zum Schneiden das Drehen der Pflanze im Wesentlichen um ihren Stängel umfasst.

9. Verfahren nach Anspruch 8, wobei das Positionieren der Pflanze in dem Schneidebereich zum Schneiden ferner das Befördern der Pflanze entlang einer vordefinierten Bewegungsbahn zu dem Schneidebereich umfasst.

10. Vorrichtung (10) zum Schneiden einer Pflanze, umfassend
- einen Träger (11) zum Tragen der Pflanze, konfiguriert zum Positionieren der Pflanze in einem Schneidebereich,
- ein erstes Kamerasystem (12) zum Herstellen eines ersten Bildes der Pflanze, getragen von dem Träger in einen Bereich, in dem sich die Pflanze befindet, bevor sie in dem Schneidebereich positioniert wird,
- eine Verarbeitungseinheit (13) für die Analyse des ersten Bildes der Pflanze, um mindestens eine Schneideposition auf der Pflanze, wo die Pflanze geschnitten werden soll, zu bestimmen,
- einen Schneideroboter (15), umfassend ein Schneideelement (16) zum Schneiden einer Pflanze in mindestens zwei Teile an der Schneideposition und einen beweglichen Arm (17) zum Bewegen des Schneideelements zu einer Pflanze an dem Träger,
**dadurch gekennzeichnet, dass**
der Schneideroboter ferner ein zweites Kamerasystem (14) zum Bereitstellen eines zweiten Bildes der Pflanze in dem Schneidebereich umfasst, um das Schneideelement zu der Schneideposition zu leiten.

11. Vorrichtung nach Anspruch 10, umfassend Mittel zur Verwendung des zweiten Bildes zum Verfeinern der Schneideposition, die durch das Analysieren (3) des ersten Bildes bestimmt wurde.

12. Vorrichtung nach Anspruch 10, umfassend Mittel zum Anpassen der Bewegungsbahn des Schneideelements nach der Analyse jeder einer Serie von zweiten Bildern, genommen während der Bewegung des Schneideelements zu der Schneideposition auf der Pflanze.

13. Vorrichtung nach Anspruch 10, wobei das zweite Kamerasystem (14) konfiguriert ist zum Erhalten des zweiten Kamerabildes von einer Ansicht entlang des Schneideelements zu der Pflanze.

14. Vorrichtung nach Anspruch 10, wobei der Schneideroboter konfiguriert ist zum Empfangen von Steuerinformation von der Verarbeitungseinheit (13) für eine vorläufige grobe Positionierung des Schneideelements in dem Schneidebereich.

15. Vorrichtung nach Anspruch 10, wobei der Träger eine drehbare Plattform (18) zum Drehen einer Pflanze um ihren Stängel umfasst.

16. Vorrichtung nach einem der Ansprüche 1-15, wobei das erste Kamerasystem (12) eine telezentrische Linse (121) umfasst.

17. Vorrichtung nach Anspruch 16, wobei das erste Kamerasystem (12) eine Lichtquelle (122) zum Bereitstellen von diffusem Licht an der Position einer Pflanze, getragen von dem Träger, umfasst.

18. Vorrichtung nach Anspruch 17, wobei die Lichtquelle eine Infrarotlampe ist.

## Revendications

1. Méthode de coupe de plantes, comprenant les étapes consécutives consistant à
- agencer (1) une plante sur un support pour transporter la plante dans une zone de coupe,
- produire (2) une première image de la plante par un premier système de prise de vue,
- analyser (3) la première image de manière à déterminer au moins une position de coupe sur la plante, où la plante doit être coupée,
- positionner (4) la plante dans une zone de coupe pour la coupe, ledit positionnement dans la zone de coupe étant effectué après ladite production (2) de la première image de la plante,
- couper (6) la plante en au moins deux parties à la position de coupe sur la plante, lorsque la plante est dans la zone de coupe,
**caractérisée en ce que**
la coupe est effectuée par l'utilisation (5) des informations d'une seconde image prise de la plante dans la zone de coupe pour diriger un élément de coupe vers ladite position de coupe sur la plante.

2. Méthode selon la revendication 1, dans laquelle la seconde image est obtenue à l'aide d'un second système de prise de vue, et la seconde image est utilisée pour affiner la position de coupe qui a été déterminée par ladite analyse (3) de la première image.

3. Méthode selon la revendication 1, comprenant l'obtention de la seconde image de prise de vue à partir d'une vue le long de l'élément de coupe en direction de la plante.

4. Méthode selon la revendication 1, comprenant le déplacement de l'élément de coupe en direction de la position de coupe sur la plante avant d'obtenir la seconde image.

5. Méthode selon la revendication 1, dans laquelle la trajectoire de l'élément de coupe est ajustée après analyse de chaque image d'une série de secondes images prises lors du déplacement de l'élément de coupe en direction de ladite position de coupe sur la plante.

6. Méthode selon la revendication 1, dans laquelle la première image de la plante est obtenue d'après des images prises à partir de différents points de vue et l'étape d'analyse de la première image comprend la construction d'une image tridimensionnelle d'après des images prises à partir de différents points de vue.

7. Méthode selon la revendication 6, dans laquelle la plante est tournée sensiblement autour de sa tige pour obtenir la première image de la plante.

8. Méthode selon l'une quelconque des revendications précédentes, dans laquelle le positionnement de la plante dans la zone de coupe pour une coupe comprend la rotation de la plante sensiblement autour de sa tige.

9. Méthode selon la revendication 8, dans laquelle le positionnement de la plante dans la zone de coupe pour une coupe comprend en outre le transport de la plante le long d'une trajectoire prédéfinie vers la zone de coupe.

10. Appareil (10) pour couper une plante, comprenant
- un convoyeur (11) pour transporter la plante configurée afin de positionner la plante dans une zone de coupe,
- un premier système de prise de vue (12) pour produire une première image de la plante transportée par le convoyeur dans une zone dans laquelle la plante est située avant d'être positionnée dans la zone de coupe,
- une unité de traitement (13) pour l'analyse de la première image de la plante, de manière à déterminer au moins une position de coupe sur la plante où la plante doit être coupée,
- un robot de coupe (15) comprenant un élément de coupe (16) pour couper une plante en au moins deux parties à la position de coupe et un bras mobile (17) pour déplacer l'élément de coupe en direction d'une plante au niveau du convoyeur,
**caractérisé en ce que**
le robot de coupe comprend en outre un second système de prise de vue (14) pour fournir une seconde image de la plante dans la zone de coupe, pour diriger l'élément de coupe vers la position de coupe.

11. Appareil selon la revendication 10, comprenant des moyens pour utiliser la seconde image pour affiner la position de coupe qui a été déterminée par ladite analyse (3) de la première image.

12. Appareil selon la revendication 10, comprenant des moyens pour ajuster la trajectoire de l'élément de coupe après analyse de chaque image d'une série de secondes images prises pendant le déplacement de l'élément de coupe en direction de ladite position de coupe sur la plante.

13. Appareil selon la revendication 10, dans lequel le second système de prise de vue (14) est configuré pour obtenir la seconde image de prise de vue à partir d'une vue le long de l'élément de coupe en direction de la plante.

14. Appareil selon la revendication 10, dans lequel le robot de coupe est configuré pour recevoir des informations de commande provenant de l'unité de traitement (13) pour un positionnement préliminaire grossier de l'élément de coupe dans la zone de coupe.

15. Appareil selon la revendication 10, dans lequel le support comprend une plate-forme rotative (18) pour faire tourner une plante autour de sa tige.

16. Appareil selon l'une quelconque des revendications 1-15, dans lequel le premier système de prise de vue (12) comprend une lentille télécentrique (121).

17. Appareil selon la revendication 16 dans lequel le premier système de prise de vue (12) comprend une source de lumière (122) pour délivrer une lumière diffuse à la position d'une plante portée par le support.

18. Appareil selon la revendication 17, dans lequel la source de lumière est une lampe infrarouge.
